# EUROPEAN PATENT APPLICATION

(11) **EP 4 516 607 A1**
(43) Date of publication of application: **05.03.2025**
(21) Application number: 23194119.6
(22) Date of filing: 29.08.2023
(51) Int. Cl.: B60T 17/22, B60T 8/88

(54) **A METHOD FOR PROVIDING DRIVER FEEDBACK**

(71) Applicant: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: NORSTRÖM, Kristofer, 411 29 GÖTEBORG (SE); BLOMBERG, Per, 531 57 LIDKÖPING (SE)
(74) Representative: Zacco Sweden AB

(57) **Abstract**

The invention relates to a method for providing driver feedback to a driver of a vehicle. The method comprises receiving (10) a brake signal and recording the brake signal as a function of time, which brake signal correlates to or is a direct measure of a brake torque provided by a brake of the vehicle during a braking operation, creating (20) a brake signal curve based on the received brake signal and evaluating (30) the brake signal curve with respect to a braking parameter for determining the quality of the braking operation, and providing (40) the driver feedback based on the determined quality of the braking operation to a driver information system of the vehicle.

## Description

### TECHNICAL FIELD

The invention relates to a method and an arrangement for providing driver feedback to a driver of a vehicle, particularly for a driver driving a vehicle on a racetrack.

### BACKGROUND

When driving a vehicle the smoothness of the braking performed by the driver is important in order to apply brake torque in an adequate way for the current braking operation. An optimized working point with respect to the slip ratio of the tires is desired, both for maintaining the highest grip or friction between the tires and the road, and for avoiding unnecessary wear on the tires.

### SUMMARY

An objective of the invention is to provide a method for providing driver feedback to a driver of a vehicle, by which method the driver can learn and improve the way of braking the vehicle for optimizing the braking operation.

The objective is achieved by a method for providing driver feedback to a driver of a vehicle, wherein the method comprises receiving a brake signal and recording the brake signal as a function of time, which brake signal correlates to or is a direct measure of a brake torque provided by a brake of the vehicle during a braking operation, creating a brake signal curve based on the received brake signal and evaluating the brake signal curve with respect to a braking parameter for determining the quality of the braking operation, and providing the driver feedback based on the determined quality of the braking operation to a driver information system of the vehicle.

The invention is based on the insight that by such a method, a quantified value of the quality of the braking operation can be provided to the driver, preferably immediately after the braking operation has been performed. The smoothness of the braking operation can be evaluated and the braking operation can be given a score, and the braking operation score and/or coaching tips based on the braking operation score can be presented to the driver by the driver information system.

The brake signal can be provided in various ways, as long as the measured and received brake signal correlates to or is a direct measure of the brake torque, such as from a sensor measuring the travel or depression of a brake pedal of the vehicle, from a sensor measuring a hydraulic brake pressure of a brake of the vehicle, from a control unit providing a signal for requested brake force or brake torque of a brake of the vehicle, or from a sensor measuring the current brake force or brake torque applied.

According to one embodiment, the method comprises identifying a maximum brake signal peak that occurred during the braking operation and dividing the brake signal curve into a first portion of the brake signal curve before the maximum brake signal peak and a second portion of the brake signal curve after the maximum brake signal peak, and evaluating the first portion of the brake signal curve with respect to a first braking parameter and the second portion of the brake signal curve with respect to a second braking parameter. Hereby, it can be assessed if the driver was using the available grip in a corner of the racetrack, and if the applied brake torque had to be corrected. The result of the assessment can be used for giving detailed feedback to the driver about the braking operation and what changes in braking behaviour would improve the braking performance.

According to a further embodiment, the first braking parameter is an area under the brake signal curve and/or the second parameter is an area under the brake signal curve. Hereby, a quantitative parameter enabling the provision of a qualitative analysis result for the first portion of the braking operation and/or the second portion of the braking operation can be achieved.

According to a further embodiment, the first braking parameter is an area under the brake signal curve, wherein the method comprises comparing the area under the brake signal curve in the first portion of the brake signal curve with a reference area, and determining the quality of the braking operation by a ratio between the brake signal curve area and the reference area, wherein the ratio is ≤1, and the bigger ratio, the higher quality of the braking operation. Hereby, a quantitative parameter that can be used to give a qualitative assessment of the braking operation, which corresponds to the tendency of the driver to make corrections to the applied brake torque in the first portion of the braking operation, can be achieved.

According to a further embodiment, the second braking parameter is an area under the brake signal curve, wherein the method comprises comparing the area under the brake signal curve in the second portion of the brake signal curve with a reference area, and determining the quality of the braking operation by a ratio between the brake signal curve area and the reference area, wherein the ratio is ≥1, and the smaller ratio, the higher quality of the braking operation. Hereby, a quantitative parameter that can be used to give a qualitative assessment of the braking operation, which corresponds to the tendency of the driver to make corrections to the applied brake torque in the second portion of the braking operation, can be achieved. A ratio above 1 can also indicate that the driver did not fully utilise the available grip in the first portion of the braking operation.

According to a further embodiment, the first parameter is the derivative of the brake signal curve, and the presence of a negative derivative of the first portion of the brake signal curve is defined as lowering the quality of the braking operation. Hereby, mapping where the applied brake torque was decreasing before the maximum brake signal peak, which corresponds to local maxima in the first portion of the braking operation, can be performed. Such a local maxima would result in a longer application of the brake torque which in turn leads to an increased lap time when driving on a racetrack.

According to a further embodiment, the first parameter is the shape of brake signal curve, and the presence of a local maxima or local minima of the first portion of the brake signal curve is defined as lowering the quality of the braking operation. Such a local maxima or minima would result in a longer application of the brake torque which in turn leads to an increased lap time when driving on a racetrack.

According to a further embodiment, the second parameter is the derivative of the brake signal curve, and the presence of a positive derivative of the second portion of the brake signal curve is defined as lowering the quality of the braking operation. Hereby, mapping where the applied brake torque was increasing after the maximum brake signal peak, which corresponds to local maxima in the second portion of the braking operation, can be performed. Such a local maxima would result in a longer application of the brake torque which in turn leads to an increased lap time when driving on a racetrack.

According to a further embodiment, the second parameter is the shape of brake signal curve, and the presence of a local maxima or local minima of the second portion of the brake signal curve is defined as lowering the quality of the braking operation. Such a local maxima or minima would result in a longer application of the brake torque which in turn leads to an increased lap time when driving on a racetrack.

According to a further embodiment, the second parameter is the shape of brake signal curve, and the presence of a large positive derivative immediately before a local maxima of the second portion of the brake signal curve is defined as lower quality of the braking operation than a small positive derivative immediately before a local maxima of the second portion of the brake signal curve. Hereby, the quality of the braking operation can be further evaluated since small corrections to the applied brake torque may be necessary when the driver has used the available grip in the first portion of the braking operation.

According to a further embodiment, the method comprises identifying a start of the braking operation when the measured brake signal increases to a start value exceeding a first threshold value and an end of the braking operation when the measured brake signal decreases to an end value which is smaller than a second threshold value. For example, the first threshold value and the second threshold value can be the same. Hereby, where in time the braking operation was performed can be identified.

According to a further embodiment, the method comprises defining the braking operation as a single braking operation provided that the time period between the end value of the braking operation and a start value of a second subsequent braking operation is longer than a predetermined time period. Hereby, checking for very small time differences between periods of applied brake torque, which impact the driving with respect to one and the same corner of the racetrack and should be considered as the same braking operation, can be performed. This ensures that a coherent braking operation is considered in the analysis, which is more intuitive for the driver when to adjust the braking behaviour to improve the braking performance.

According to a further embodiment, the method comprises showing the driver feedback comprising a quantified performance value and/or coaching tip for the braking operation on a display of the driver information system. Hereby, the driver can receive driver feedback in a suitable way while driving the vehicle. By providing both quantified performance values and coaching tips, such as a description of how the braking operation can be improved to reduce the lap time when driving on a racetrack, the driver can adjust the braking behaviour and immediately see the result thereof.

According to another aspect of the invention, the invention relates to an arrangement for providing driver feedback to a driver of a vehicle, wherein the arrangement comprises a control unit receiving and recording a brake signal as a function of time, which brake signal correlates to or is a direct measure of a brake torque provided by a brake of the vehicle during a braking operation, the control unit being arranged to create a brake signal curve based on the received brake signal and evaluate the brake signal curve with respect to a braking parameter for determining the quality of the braking operation, and to provide the driver feedback based on the determined quality of the braking operation to a driver information system of the vehicle.

The invention is based on the insight that by such an arrangement, a quantified value of the quality of the braking operation can be provided to the driver, preferably immediately after the braking operation has been performed. The smoothness of the braking operation can be evaluated and the braking operation can be given a score, and the braking operation score and/or coaching tips based on the braking operation score can be presented to the driver by the driver information system.

According to one embodiment of the arrangement, the control unit is arranged to identify a maximum brake signal peak that occurred during the braking operation and divide the brake signal curve into a first portion of the brake signal curve before the maximum brake signal peak and a second portion of the brake signal curve after the maximum brake signal peak, and to evaluate the first portion of the brake signal curve with respect to a first braking parameter and the second portion of the brake signal curve with respect to a second braking parameter. Hereby, it can be assessed if the driver was using the available grip in a corner of the racetrack, and if the applied brake torque had to be corrected. The result of the assessment can be used for giving detailed feedback to the driver about the braking operation and what changes in braking behaviour would improve the braking performance.

According to a further embodiment of the arrangement, the first braking parameter is an area under the brake signal curve and/or the second parameter is an area under the brake signal curve. Hereby, a quantitative parameter enabling the provision of a qualitative analysis result for the first portion of the braking operation and/or the second portion of the braking operation can be achieved.

According to a further embodiment of the arrangement, the first braking parameter is an area under the brake signal curve, and the control unit is arranged to compare the area under the brake signal curve in the first portion of the brake signal curve with a reference area, and determining the quality of the braking operation by a ratio between the brake signal curve area and the reference area, wherein the ratio is ≤1, and the bigger ratio, the higher quality of the braking operation. Hereby, a quantitative parameter that can be used to give a qualitative assessment of the braking operation, which corresponds to the tendency of the driver to make corrections to the applied brake torque in the first portion of the braking operation, can be achieved.

According to a further embodiment of the arrangement, the second braking parameter is an area under the brake signal curve, and the control unit is arranged to compare the area under the brake signal curve in the second portion of the brake signal curve with a reference area, and determining the quality of the braking operation by a ratio between the brake signal curve area and the reference area, wherein the ratio is ≥1, and the smaller ratio, the higher quality of the braking operation. Hereby, a quantitative parameter that can be used to give a qualitative assessment of the braking operation, which corresponds to the tendency of the driver to make corrections to the applied brake torque in the second portion of the braking operation, can be achieved. A ratio above 1 can also indicate that the driver did not fully utilise the available grip in the first portion of the braking operation.

According to a further embodiment of the arrangement, the first parameter is the derivative of the brake signal curve, and the presence of a negative derivative of the first portion of the brake signal curve is defined as lowering the quality of the braking operation. Hereby, mapping where the applied brake torque was decreasing before the maximum brake signal peak, which corresponds to local maxima in the first portion of the braking operation, can be performed. Such a local maxima would result in a longer application of the brake torque which in turn leads to an increased lap time when driving on a racetrack.

According to a further embodiment of the arrangement, the second parameter is the derivative of the brake signal curve, and the presence of a positive derivative of the second portion of the brake signal curve is defined as lowering the quality of the braking operation. Hereby, mapping where the applied brake torque was increasing after the maximum brake signal peak, which corresponds to local maxima in the second portion of the braking operation, can be performed. Such a local maxima would result in a longer application of the brake torque which in turn leads to an increased lap time when driving on a racetrack.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1 is a flow chart of a method for providing driver feedback to a driver of a vehicle,
Fig. 2 is a curve illustrating a brake signal as a function of time during a braking operation.
Figs. 3A and 3B are brake signal curves where the braking during a first part of the braking operation is not optimal,
Figs. 4A and 4B are brake signal curves where the braking during a second part of the braking operation is not optimal, and
Fig. 5 is a schematic view of an arrangement for providing driver feedback to a driver of a vehicle.

### DETAILED DESCRIPTION OF EXAMPLE EMBODIMENTS

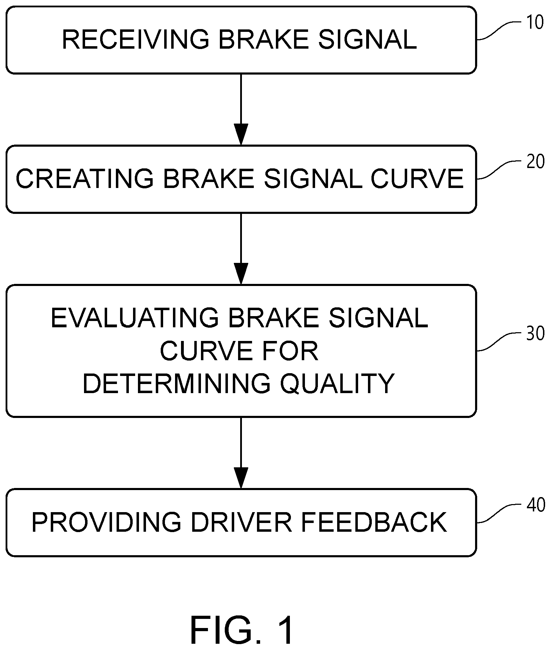

Fig. 1 is a flow chart showing a method for providing driver feedback to a driver of a vehicle.

While driving the vehicle a brake signal is received 10. When the vehicle is braked such a signal is generated. For example, when a brake pedal of the vehicle is depressed, the position of the brake pedal can be measured and a corresponding brake signal can be generated as a function of the brake pedal position. In this way, the brake signal will indicate to what extent the vehicle is braked, i.e. the brake signal correlates to or is a direct measure of the brake torque applied at the current time point.

The brake signal is recorded as a function of time during a braking operation, and a brake signal curve based on the received brake signal is created 20. By continuously recording the magnitude of the brake signal as a function of time, during the braking operation, the brake signal curve generated will provide information about the braking behaviour of the driver of the vehicle. Then, the brake signal curve is evaluated 30 with respect to a braking parameter for determining the quality of the braking operation.

Finally, the driver feedback based on the determined quality of the braking operation is provided 40 to a driver information system of the vehicle by which system the driver feedback can be presented to the driver of the vehicle. Such a driver information system suitably comprises a display showing the driver feedback by way of texted coaching tips, pictures, diagrams, messages and/or numbers or any other appropriate form.

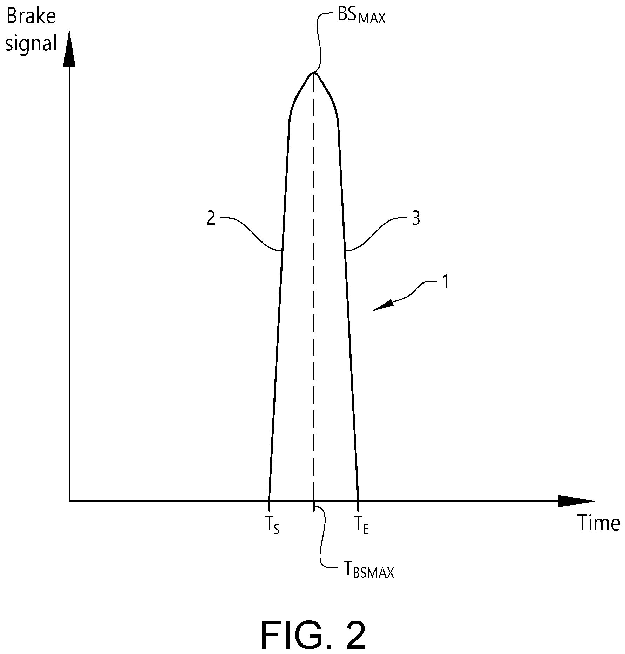

Fig. 2 shows a curve illustrating the brake signal as a function of time during a braking operation.

This brake signal curve 1 in Fig. 2 is an example that shows a near ideal braking curve. At the timepoint Tₛ the braking operation starts and at the timepoint T_{E} the braking operation ends. The start of the braking operation at Tₛ can be identified by a first threshold value for the brake signal. When the measured brake signal increases to a start value exceeding the first threshold value, the time point Ts is set. The end of the braking operation at T_{E} can be identified by a second threshold value for the brake signal. When the measured brake signal decreases to an end value which is smaller than the second threshold value, the time point T_{E} is set. As an example only, the first threshold value and the second threshold value is the same.

The braking operation is suitably defined as a single braking operation provided that the time period between the end value at T_{E} of the braking operation and a start value at Ts of a second subsequent braking operation is longer than a predetermined time period. Such a predetermined time period can be for example 0.5 seconds.

As also illustrated in Fig. 2, the brake signal curve 1 has a maximum brake signal peak BS_{MAX} at the time point T_{BSMAX}. The method suitably comprises identifying the maximum signal brake peak BS_{MAX} that occurred during the braking operation and dividing the brake signal curve into a first portion 2 of the brake signal curve 1 before the maximum brake signal peak BS_{MAX} and a second portion 3 of the brake signal curve 1 after the maximum brake signal peak BS_{MAX}.

Thereafter, the first portion 2 of the brake signal curve 1 can be evaluated with respect to a first braking parameter and the second portion 3 of the brake signal curve 1 can be evaluated with respect to a second braking parameter.

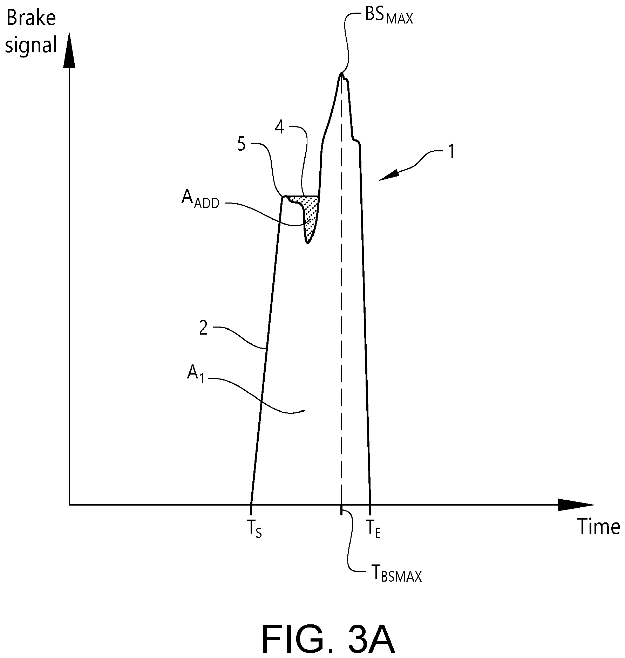

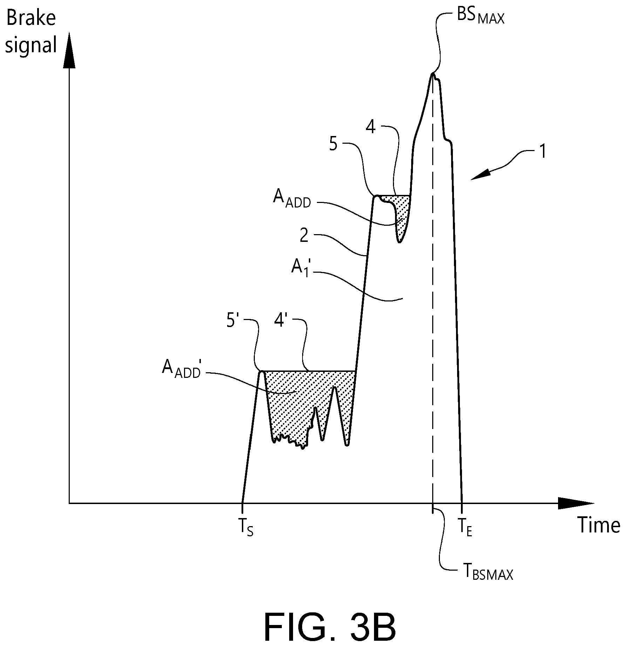

Figs. 3A and 3B show examples of brake signal curves where the braking during the first part of the braking operation before the maximum brake signal peak BS_{MAX} is not optimal. More particularly, the braking according to the brake signal curve in Fig. 3A is considered better than the braking according to the brake signal curve in Fig. 3B, and the braking according to the brake signal curve in Fig. 2 is considered better than the braking according to the brake signal curve in Fig. 3A.

The first braking parameter can be an area under the brake signal curve 1. In the embodiment examples in Figs. 3A and 3B, the first braking parameter is the area under the brake signal curve, between Ts and T_{BSMAX}, wherein the method comprises comparing the area under the brake signal curve in the first portion 2 of the brake signal curve 1 with a reference area, and determining the quality of the braking operation by a ratio between the brake signal curve area and the reference area.

With reference to Fig. 3A, the area under the first portion 2 of the brake signal curve 1 is denoted A₁. The reference area A_{1R} is created by a horizontal line 4 extending from a local brake signal peak (local maxima) 5 to the brake signal curve, thereby taking any negative derivative away from the first portion 2 of the brake signal curve 1. In other words, the reference area A_{1R} is suitably the area A₁ under the measured brake signal curve plus an added area A_{ADD} under the horizontal line 4. The added area A_{ADD} is indicated by dots. The ratio Q=A₁/A_{1R} is ≤1, and the bigger ratio Q, the higher quality of the braking operation.

With reference to Fig. 3B, the area under the first portion 2 of the brake signal curve 1 is denoted A₁'. The reference area A_{1R}' is created by two horizontal lines 4, 4' each extending from a local brake signal peak (local maxima) 5, 5' to the brake signal curve, thereby taking any negative derivative away from the first portion 2 of the brake signal curve 1. In other words, the reference area A_{1R}' is suitably the area A₁' under the measured brake signal curve plus the added area A_{ADD} under the horizontal line 4 plus another added area A_{ADD}' under the horizontal line 4'. The added areas A_{ADD} and A_{ADD}' are indicated by dots. The ratio Q=A₁'/A_{1R}' is ≤1, and the bigger ratio Q, the higher quality of the braking operation.

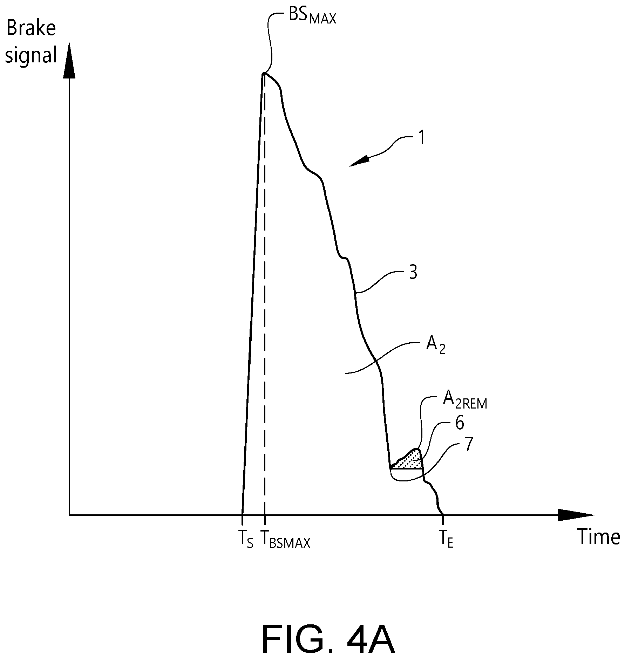

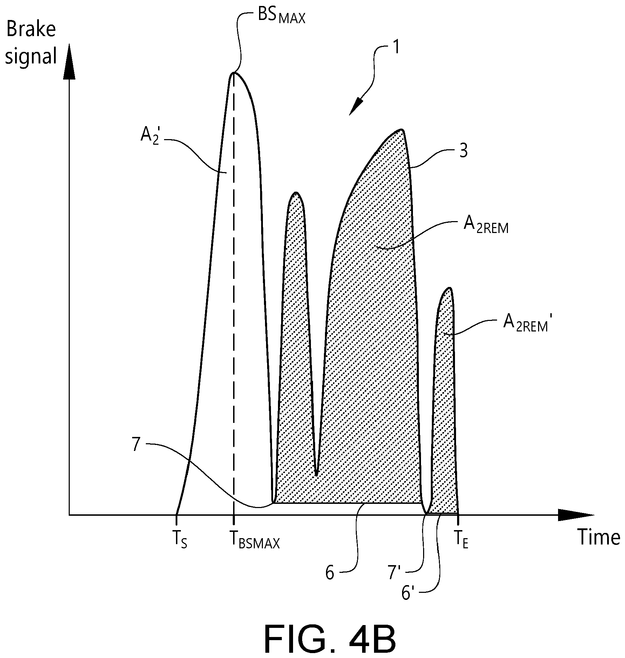

Figs. 4A and 4B show examples of brake signal curves where the braking during the second part of the braking operation after the maximum brake signal peak BS_{MAX} is not optimal. More particularly, the braking according to the brake signal curve in Fig. 4A is considered better than the braking according to the brake signal curve in Fig. 4B, and the braking according to the brake signal curve in Fig. 2 is considered better than the braking according to the brake signal curve in Fig. 4A.

The second braking parameter can be an area under the brake signal curve. In Figs. 4A and 4B, the second braking parameter is an area under the brake signal curve, between T_{BSMAX} and T_{E}, wherein the method comprises comparing the area under the brake signal curve in the second portion 3 of the brake signal curve with a reference area, and determining the quality of the braking operation by a ratio between the brake signal curve area and the reference area.

With reference to Fig. 4A, the area under the second portion 3 of the brake signal curve 1 is denoted A₂. The reference area A_{2R} is created by a horizontal line 6 extending from a local brake signal minimum (local minima) 7 to the brake signal curve, thereby taking any positive derivative away from the brake signal curve. In other words, the reference area A_{2R} is suitably the area A₂ under the measured brake signal curve minus a removed area A_{2REM} above the horizontal line 6. The removed area A_{2REM} is indicated by dots. The ratio Q=A₂/A_{2R} is ≥1, and the smaller ratio Q, the higher quality of the braking operation.

With reference to Fig. 4B, the area under the second portion 3 of the brake signal curve 1 is denoted A₂'. The reference area A_{2R}' is created by two horizontal lines 6, 6' each extending from a local brake signal minimum (local minima) 7, 7' to the brake signal curve, thereby taking any positive derivative away from the second portion 3 of the brake signal curve 1. In other words, the reference area A_{2R}' is suitably the area A₂' under the measured brake signal curve minus the removed area A_{2REM} above the horizontal line 6 minus a removed area A_{2REM}' above the horizontal line 6'. The removed areas A_{2REM} and A_{2REM}' are indicated by dots. The ratio Q=A₂'/A_{2R}' is ≥1, and the smaller ratio Q, the higher quality of the braking operation.

Alternatively, the first parameter can be the derivative of the brake signal curve, and the presence of a negative derivative of the first portion of the brake signal curve is defined as lowering the quality of the braking operation, or the first parameter is the shape of brake signal curve, and the presence of an extreme point, local minima or local maxima, of the first portion of the brake signal curve is defined as lowering the quality of the braking operation.

In the same way, the second parameter can be the derivative of the brake signal curve, and the presence of a positive derivative of the second portion of the brake signal curve is defined as lowering the quality of the braking operation, or the second parameter is the shape of brake signal curve, and the presence of an extreme point, local maxima or minima, of the second portion of the brake signal curve is defined as lowering the quality of the braking operation. Further, in the second portion of the brake signal curve, a large positive derivative immediately before a local maxima is defined as lower quality of the braking operation than a small positive derivative immediately before a local maxima.

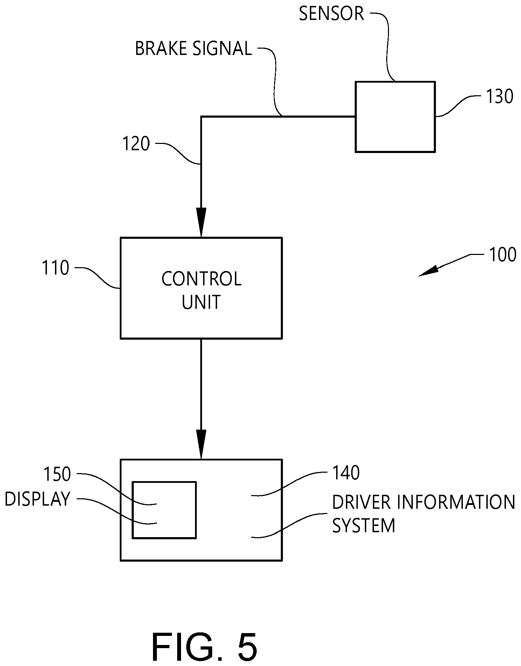

Fig. 5 shows a schematic view of an arrangement 100 for providing driver feedback to a driver of a vehicle.

The arrangement comprises a control unit 110 receiving and recording a brake signal 120 as a function of time during a braking operation. The arrangement 100 suitably comprises a sensor 130 for providing the brake signal 120 to the control unit 110. For example, when a brake pedal of the vehicle is depressed, the position of the brake pedal can be measured by the sensor 130 and a corresponding brake signal 120 can be generated as a function of the brake pedal position. `

The control unit 110 is arranged to create a brake signal curve based on the received brake signal 120 and evaluate the brake signal curve with respect to a braking parameter for determining the quality of the braking operation. The evaluation of the brake signal curve can be performed as previously described hereinabove with reference to the method for providing driver feedback to a driver of a vehicle.

Further, the control unit 110 is arranged to provide the driver feedback based on the determined quality of the braking operation to a driver information system 140 of the vehicle. The arrangement 100 suitably comprises such a driver information system 140 having a display 150 showing the driver feedback in the vehicle. Such driver feedback may comprise quantified performance values and/or coaching tips for the braking operation.

The control unit 110 may comprise one or more microprocessors and/or one or more memory devices or any other components for executing computer programs or receiving and/or sending control signals for providing the driver feedback. Particularly, the control unit is preferably provided with a computer program comprising program code means for performing all steps of any embodiment of the method described herein.

The control unit can be a separate component or be integrated in another controller of the vehicle.

It is to be understood that the present invention is not limited to the embodiments described above and illustrated in the drawings; rather, the skilled person will recognize that many changes and modifications may be made within the scope of the appended claims.

## Claims

1. A method for providing driver feedback to a driver of a vehicle, **characterized by** receiving (10) a brake signal and recording the brake signal as a function of time, which brake signal correlates to or is a direct measure of a brake torque provided by a brake of the vehicle during a braking operation, creating (20) a brake signal curve based on the received brake signal and evaluating (30) the brake signal curve with respect to a braking parameter for determining the quality of the braking operation, and providing (40) the driver feedback based on the determined quality of the braking operation to a driver information system of the vehicle.

2. A method according to claim 1, **characterized by** identifying a maximum brake signal peak (BS_{MAX}) that occurred during the braking operation and dividing the brake signal curve into a first portion (2) of the brake signal curve before the maximum brake signal peak and a second portion (3) of the brake signal curve after the maximum brake signal peak, and evaluating the first portion of the brake signal curve with respect to a first braking parameter and the second portion of the brake signal curve with respect to a second braking parameter.

3. A method according to claim 2, wherein the first braking parameter is an area (A₁) under the brake signal curve and/or the second parameter is an area (A₂) under the brake signal curve (1).

4. A method according to claim 2, wherein the first braking parameter is an area under the brake signal curve, wherein the method comprises comparing the area (A₁) under the brake signal curve in the first portion of the brake signal curve with a reference area (A_{1R}), and determining the quality of the braking operation by a ratio (Q=A₁/A_{1R}) between the brake signal curve area and the reference area, wherein the ratio is ≤1, and the bigger ratio (Q), the higher quality of the braking operation.

5. A method according to claim 2 or 4, wherein the second braking parameter is an area under the brake signal curve, wherein the method comprises comparing the area (A₂) under the brake signal curve in the second portion of the brake signal curve with a reference area (A_{2R}), and determining the quality of the braking operation by a ratio (Q=A₂/A_{2R}) between the brake signal curve area and the reference area, wherein the ratio is ≥1, and the smaller ratio (Q), the higher quality of the braking operation.

6. A method according to claim 2, wherein the first parameter is the derivative of the brake signal curve (1), and the presence of a negative derivative of the first portion (2) of the brake signal curve is defined as lowering the quality of the braking operation.

7. A method according to claim 2, wherein the first parameter is the shape of brake signal curve, and the presence of a local maxima (5) or local minima of the first portion (2) of the brake signal curve (1) is defined as lowering the quality of the braking operation.

8. A method according to claim 2 or 6 or 7, wherein the second parameter is the derivative of the brake signal curve (1), and the presence of a positive derivative of the second portion (3) of the brake signal curve is defined as lowering the quality of the braking operation.

9. A method according to claim 2 or 6 or 7, wherein the second parameter is the shape of brake signal curve, and the presence of a local maxima or local minima (7) of the second portion (3) of the brake signal curve (1) is defined as lowering the quality of the braking operation.

10. A method according to claim 2 or 7, wherein the second parameter is the shape of brake signal curve, and the presence of a large positive derivative immediately before a local maxima of the second portion (3) of the brake signal curve (1) is defined as lower quality of the braking operation than a small positive derivative immediately before a local maxima of the second portion (3) of the brake signal curve (2).

11. A method according to any preceding claim, **characterized by** identifying a start of the braking operation when the measured brake signal increases to a start value exceeding a first threshold value and an end of the braking operation when the measured brake signal decreases to an end value which is smaller than a second threshold value.

12. A method according to claim 11, **characterized by** defining the braking operation as a single braking operation provided that the time period between the end value of the braking operation and a start value of a second subsequent braking operation is longer than a predetermined time period.

13. A method according to any preceding claim, **characterized by** showing the driver feedback comprising a quantified performance value and/or coaching tip for the braking operation on a display (150) of the driver information system (140).

14. An arrangement (100) for providing driver feedback to a driver of a vehicle, **characterized in that** the arrangement comprises a control unit (110) receiving and recording a brake signal (120) as a function of time, which brake signal correlates to or is a direct measure of a brake torque provided by a brake of the vehicle during a braking operation, the control unit (110) being arranged to create a brake signal curve based on the received brake signal and evaluate the brake signal curve with respect to a braking parameter for determining the quality of the braking operation, and to provide the driver feedback based on the determined quality of the braking operation to a driver information system (140) of the vehicle.

15. An arrangement according to claim 14, **characterized** ]**in that** the control unit (110) is arranged to identify a maximum brake signal peak (BS_{MAX}) that occurred during the braking operation and divide the brake signal curve (1) into a first portion (2) of the brake signal curve before the maximum brake signal peak and a second portion (3) of the brake signal curve after the maximum brake signal peak, and to evaluate the first portion of the brake signal curve with respect to a first braking parameter and the second portion of the brake signal curve with respect to a second braking parameter.

16. An arrangement according to claim 15, **characterized in that** the first braking parameter is an area (A₁) under the brake signal curve and/or the second parameter is an area (A₂) under the brake signal curve.

17. An arrangement according to claim 15, **characterized in that** the first braking parameter is an area under the brake signal curve, and the control unit is arranged to compare the area (A₁) under the brake signal curve in the first portion of the brake signal curve with a reference area (A_{1R}), and determining the quality of the braking operation by a ratio (Q=A₁/A_{1R}) between the brake signal curve area and the reference area, wherein the ratio is ≤1, and the bigger ratio (Q), the higher quality of the braking operation.

18. An arrangement according to claim 15 or 17, **characterized in that** the second braking parameter is an area under the brake signal curve, and the control unit is arranged to compare the area (A₂) under the brake signal curve in the second portion of the brake signal curve with a reference area (A_{2R}), and determining the quality of the braking operation by a ratio (Q=A₂/A_{2R}) between the brake signal curve area and the reference area, wherein the ratio is ≥1, and the smaller ratio (Q), the higher quality of the braking operation.

19. An arrangement according to claim 15, **characterized in that** the first parameter is the derivative of the brake signal curve, and the presence of a negative derivative of the first portion of the brake signal curve is defined as lowering the quality of the braking operation.

20. An arrangement according to claim 15 or 19, **characterized in that** the second parameter is the derivative of the brake signal curve, and the presence of a positive derivative of the second portion of the brake signal curve is defined as lowering the quality of the braking operation.
